# EUROPEAN PATENT APPLICATION

(11) **EP 1 574 138 A1**
(43) Date of publication of application: **14.09.2005**
(21) Application number: 05075569.3
(22) Date of filing: 08.03.2005
(51) Int. Cl.: A23L 1/164, A23L 1/217

(54) **Low-fat, crispy, crinkled snack food product and process for preparing the same**

(30) Priority: 11.03.2004 EP 04075780
(71) Applicant: UNILEVER N.V., 3013 AL Rotterdam (NL); UNILEVER PLC, London EC4P 4BQ (GB)
(72) Inventor: Bösch, Thomas Heinz Günter, 74074 Heilbronn (DE); Detje, Peter Ernst Heinrich, 74074 Heilbronn (DE); Lung, Oliver, 74074 Heilbronn (DE); Pfeilstetter, Johann, 74074 Heilbronn (DE)
(74) Representative: Wurfbain, Gilles L.

(57) **Abstract**

A low-fat, low-moisture crispy snack food product on the basis of potato and/or corn and/or rice said food being a particle or plurality of particles of loosely crinkled dough sheet.

## Description

### Field of the invention

The present invention relates to a low-fat low-moisture crispy (savoury) snack food product on the basis of matter from potatoes and/or corn and/or rice, preferably to a large extent from potato, which snack food product can be marketed as a low-fat alternative to conventional fried crisps or chips.

### Background of the invention

Snack food such as potato crisps (as they are called in the UK, or chips as they are called in other countries) enjoy wide popularity for a long time. Usually portions of 50-500 g are packed in hermetically sealed bags, and eaten (usually without heating) as a snack product, optionally with added seasoning or dip. Conventionally, such crisps are prepared by thinly slicing potatoes, which slices are deep-fried in hot oil (temperatures 160-220°C), and optionally salted and/or flavoured. Good quality crisps are dry and crispy. Other variants are made out of potato starch and/or corn starch. Also, using e.g. potato and/or corn starch other variants in shape have been designed, but most of those dry, savoury starch-based snack products have in common that they contain a fairly large amount (up to 35% weight) of oil or fat, due to the manner of preparation. Examples of such products are described in e.g. US 4,973,481, US, 3,835,222 and US 3,997,684.

The last few decades consumers have become increasingly health conscious, and there is a demand for foodstuffs similar in performance of conventional foodstuffs, but having a reduced level of fat. Originally, it has been preferred that all of flavour, flavour delivery, texture, structure and appearance should mimic as closely as possible the full-fat original products. Thus, next to e.g. low fat margarine, low fat ice cream, low fat crisps have been developed.

Examples of processes that can be used to make such low fat crisps or crisp-like product are disclosed in e.g. US 4,283,425. This document discloses a process for making potato chips having less than 10% fat (i.e. reduced fat), by a process which does not need deep-frying. The process comprises the steps of slicing potatoes, coat the slices with globular protein, followed by microwave heating to dry the particles and develop flavour and structure of fat fried potato chips.

US 5,690,982 discloses a process for preparing a low fat chip-like baked good on the basis of a starch-containing ingredient. The process involves preparing a dough from a starch-rich ingredient such as potato flour or flakes or corn flour with water, by mixing and heating (e.g. in an extruder). The dough so obtained is sheeted or rolled in thin layers, which layers are laminated (i.e. several layers stacked on top of eachother), the laminate is rolled to a thin, laminated layer, and cut into pieces and baked. The baking is done in a conventional band oven having several temperature zones of about 163-343°C (325-650F). The fast application of high heat leads to rapid formation of steam within the pieces. Said steam and rolled laminate structure gives rise to blister formation as the pieces are being baked, thus leading to products which have a 'blistered cracker' appearance. It is believed these blisters give the product the desired crispiness, usually associated with full fat products.

US 5,500,240 discloses a process for making blistered, chip-like products without using a frying step. The process involves forming a dough of 30-50% moisture by mixing wheat flour, a non-gluten starchy material such as potato flakes, water and pre-gelatinised waxy starch followed by sheeting the dough (optionally followed by laminating upon itself and reduced in thickness to form a thin sheet) and cutting to pieces, whereafter the pieces are heated in a band-oven at temperatures between 104.4-343°C (220-650F) to reduce the moisture content below 4% (actual temperatures used 310-330F = 154-165°C).

GB 2290216 discloses a process for making potato chips, which process involves the steps of making a dough of dried potatoes (e.g. flakes and granules) and cooked potatoes and 0.1-30% fat and some water, sheet the dough (0.5-2 mm thickness), form pieces by cutting, stamping or punching to the desired flat structure and bake the products at temperatures of allegedly 100-300°C (190 and 270°C being actually used) to expand the chips.

US 2,008024 discloses a process for making cereal biscuits or wafers made of whole wheat by putting a mass of whole, steamed or boiled wheat berries though a shredder or reducer to form a continuous thin, ribbed sheet of overlapping folds of dough laying one on the other, which sheet is subsequently cut and oven-dried.

US 2003/0134010 discloses breakfast cereal pieces that have a pastry-like texture. The products are cooked cereal-based snacks that provide a novel eating sensation. The products are multilayered pieces of horizontal and parallel layers with interstitial voids. Such products are prepared by forming thin layers of cooked cereal dough as sheets or flakes, compressing the thin cereal dough layer, forming individual pieces, followed by drying or toasting.

US 4,973,481 and US 3,956,517 disclose corrugated or rippled crisps or chips, obtained by sheeting a dough using one or two rippled or corrugated rollers, followed by conventional deep frying. Such products contain about 30-35% fat.

The products produced by the methods of the above references are not always satisfactory. It was found that there is a need for reduced fat (i.e. 20% or less, preferably 10% or less, based on the final product) crispy, savoury snack food product that can be alternatives to the reduced fat chip or crisp lookalikes made by the processes as described above. Such crispy snack food products are intended e.g. to be consumed at similar moments as conventional crisps, yet having a reduced fat content and good quality. Such snack food products should give a crispy feeling in the mouth (break easily upon eating, not being too hard), have a shape that is recognisable as a crisp or chip altemative (preferably but not exclusively the typical saddle-like shape or contours: concave in one direction and convex in a direction perpendicular to the first), and should have such a structural stability to allow packing a plurality of such products in a bag without excessive breakage of the products (yet such structural stability should not affect the crispiness associated with e.g. crisps or chips.

### Summary of the invention

It was found that the above objectives, may (at least in part) be met by a process for preparing a snack food product, which process involves the steps of:
- preparing a dough comprising 30-100% (weight % of the total dough) matter from potatoes and/or corn and/or rice, the dough having a moisture content of 35-70% (weight % of the total dough) and a protein content of less than 3% (weight % of the total dough),
- forming the dough into sheets having a thickness of 0.05-1 mm (preferably 0.05-0.6 mm, more preferably 0.1-0.6 mm, most preferably 0.1-0.4 mm) by sheet-forming means,
- loosely folding and/or loosely partly laminating the dough sheet to yield a crinkled dough sheet
- forming the crinkled dough sheet into individual crinkled particles,
- drying the crinkled particles to a moisture content of 0-8% (preferably 0-6% wt) (of the dried particles),
- packing the dried particles,
wherein the crinkled dough sheet and crinkled pieces are not compressed.

In the process according to the invention, it is important that the loosely folding and/or loosely partly laminating of the dough sheet leads to more or less airy crinkled sheet: i.e. by loosely folding and/or loosely laminating a thin sheet (e.g. of thickness 0.05-1 mm prior to drying) a crinkled sheet of overall thickness of 2-30 mm thickness (preferably 3-10 mm thickness prior to drying) can be obtained having preferably 2-100 crinkles per 5 cm. In such crinkled sheet (parts of) separate sheets as formed prior to the folding or partly laminating (e.g. of thickness 0.05-1 mm prior to drying) can preferably be identified. Such can be achieved e.g. by loosely folding or laminating (loosely such that the folds are still encompassing a void), wherein the laminates are not reduced in thickness to thin laminates e.g. by pressing or rolling following the laminating, contrary to the prior art. Although it is referred to as "crinkled", other words that can be used to describe the structure are "wavy", "striated", or "rippled". It is essential that at least the majority of the folds or crinkles enclose a void, which is a reason why the material is not compressed.

The forming of the dough into sheets of 0.05-1 mm (preferably 0.05-0.6 mm, more preferably 0.1-0.6 mm, most preferably 0.1-0.4 mm) may be achieved by any suitable conventional sheet-forming means. Thus, the sheet-forming means may comprise e.g. extrusion, pressing through a die, or by rolling of the dough into sheets using one or more rollers. It was found that pressures on the dough upon forming should preferably not be too high, in order to avoid the formation of too much free starch in the dough, resulting in e.g. a too firm or hard texture. Sheet-forming means comprising (a pair of) rollers is most preferred.

Preferably, the dough sheet leaving the sheet-forming means is fed onto transport means. Preferably, the transport means comprises a moving belt. With such arrangement, the loosely folding and/or loosely partly laminating into crinkled sheet may suitably be effected when more dough sheet (in cm /second) is delivered to the transport means (e.g. a belt) than the transport means can directly transport away (as a single, flat-lying sheet), thus leading to the desired crinkled structure. This can be achieved e.g. when the ratio "speed of the dough leaving the sheet-forming means" : "speed of the transport means (e.g. a transport belt)" is between 100:1 and 3:1, preferably between 50:1 and 5:1.

The so-obtained crinkled dough sheet can by formed or divided into individual crinkled particles by techniques as known in the art, such as e.g. by cutting or stamping (e.g. with circular or oval shapes) to form (low fat) crispy (savoury) snack food products. The starch in the shaped dough can usually be sufficient to "glue" the folds together and hold them together until (and after) the drying stage. Thus, the invention further relates to a crispy (savoury) snack food product having the shape of a crinkled particle(s).

It was found the drying can be effected (e.g. in an oven) at temperatures below 100°C, e.g. above 60°C and below 100°C, or 75-100°C, but the products so obtained may have a bit of a bleak color: drying (for at least part of the drying process) at higher temperature (e.g. up to 140 or up to 160 or even up to 200°C) for (at least) part of the drying process may provide products having a more desired golden/yellow color. Preferably, drying takes place in two temperature stages, a first drying at 80-160°C, preferably 90-130°C (e.g. to set the structure), followed by a final drying to the desired moisture level of 0-8% at 60-100°C, preferably 60-90°C.

It may be preferred that prior to or during drying the formed individual crinkled dough particles are shaped from flat-lying crinkled dough pieces into curved, bent, concave-convex, (double)concave, or (double)convex crinkled dough particles. Thus, the process according to the invention may further comprise a shaping (prior to or during drying) of the formed individual crinkled dough particles from flat-lying crinkled dough pieces into curved, bent, concave-convex, (double)concave, or (double)convex crinkled dough particles. Such non-flat crinkled dough particles may have as additional advantage that the crinkles are slightly opened-up on one or both sides of the particle, thus giving extra (perceived) crispiness and enhanced rigidity, which is practical for packing the crisps in a bag. Surprisingly, such rigidity did not affect crispiness. As an additional advantage, such curved crinkled particles have an overall shape that is more like conventional potato crisps. The curve or bend may be in one dimension (thus yielding a concave or convex particle) or in more dimensions (thus yielding e.g. a saddle-shaped crinkled dough particle (concave-convex) or double concave or double convex particle). It is preferred that at least one curve or bend is in a direction substantially perpendicular (e.g. + or - 20° angle difference to exactly perpendicular) to the crinkles. The shaping into the curved, bent, concave-convex, (double)concave or (double)convex crinkled dough pieces may be performed by any suitable means, e.g. by mechanical deformation followed by drying to fix the structure, by drying in a shaped container or holder, by uneven heating on either side, or other. A shape giving step can be: a pre-drying for 10 seconds - 10 minutes for 100-200°C in a shaped container or holder, either by heating the container or holder (conduction) or alternatively by convection heating (hot air), or both, optionally followed by a final drying step to the desired moisture content (e.g. at temperatures of 60-140°C). In a more preferred way, in order to obtain shaped particles, the individual pieces may be dried in moulds which moulds are concave, preferably concave in one direction (i.e. a mould in the shape of a gutter or trough, e.g. with a radius of 3-20 cm, a width of 3-8 cm, and a depth of 0.5-2 cm). Such moulds can be short, to contain one individual piece, or can be long enough to hold a plurality of pieces in a row. Preferably, the orientation of the moulds is such that the straight side of the bottom of the gutter or trough is (substantially, i.e. less than 20° angle difference) parallel to the crinkles of the crinkled shaped pieces.

In a convenient way this can be achieved if there is a belt transport means from the rollers producing the crinkled dough sheet (with crinkles perpendicular to the direction of movement of the belt). On the belt the individual pieces can be formed e.g. by stamping, and after which the pieces can be put in the moulds, which moulds can have gutter or trough shapes with the gutter or trough running also perpendicular to the moving direction of the belt. The moulds can then be transported through a drying oven.

The overall temperature to which the crispy snack food of the present invention is subjected, when compared to conventional frying of crisps, is believed to lead to less formation of acrylamides, which are known to form during heating potato ingredients at high temperatures, e.g. frying. Preferably, the process according to the present invention does not include a (deep-)frying step.

The product according to the invention (and as can be obtained using the process as described above) is a crispy or brittle (preferably savoury) snack food product (snack particles) having a fat content of 0-20% (preferably 0.1-20%, more preferably 0.1-10% wt, most preferably 0.1-5% wt, based on the dried product) and a moisture content of 0-8% (preferably 1-5% wt, based on the dry product) at least 40% (preferably at least 60%) by weight of dry components of one or more of potato, corn, rice, which snack food product is shelf stable for at least 1 month, wherein the snack food product has a thickness of 2-30 mm (preferably 3-10 mm), a length and width of 1-8 cm, and which product contains on at least one side a plurality of crinkles composed of two thin sheets (0.05-1 mm, preferably 0.05-0.6 mm thin) enclosing a void.

### Detailed description of the invention

As mentioned above, the amount of protein (e.g. gluten) should be below 3% by weight of the complete dough mixture, preferably such level of protein is below 2%, more preferably below 1 %. Reason is that too much protein can be detrimental to obtaining the desired structure (shape), texture (mouthfeel) and colour. Too much protein for example will make the product too hard for the desired purpose, and the colour too dark. For the above reasons, it is preferred that the dough in the present case is not a cereal-based dough, as cereals comprise a considerable amount of protein (in the form of gluten).

As mentioned before, the dough should comprise 30-100% matter from potatoes, and/or corn and/or rice. The use of matter from potatoes, in particular from fresh potatoes over e.g. corn, rice or cereal matter in the process according to the invention has an advantage regarding the taste and consumer appeal, in particular if potatoes are chosen that have a pleasant, non-bitter potato taste, and preferably have a starch content of 12-20%, more preferably 13-18%. Thus, the dough in the process and particles according to the invention preferably comprises 30-100% (weight % of the total dough) matter from potatoes, more preferably mashed potatoes and/or potato starch and/or potato flakes and/or potato granules.

It was found that for well shaping the dough should have a moisture content of 35-70% wt, preferably of 45-65% wt, more preferably 50-65% wt. If the dough is too wet, the dough tends to stick to the rollers, if the dough is too dry, the formed dough will easily break up. Ensuring the dough has the proper moisture content can be achieved by balancing and mixing of wet dough components (e.g. mashed potatoes) with dry dough components (e.g. potato flakes or granules, or starch or dry components from a non-potato origin, e.g. from corn or rice), or by adding moisture or removing moisture (e.g. from mashed potatoes) by known moisture-reducing steps such as partial drying. If a dough contains some oil or fat, the moisture content can be more on the lower side, and still yield a good, machinable dough. In order to obtain a suitable dough and to obtain an attractive taste, the dough is preferably prepared using mashed potatoes from fresh potatoes, e.g. as exemplified below. A potato mash so prepared usually has a moisture content of about 80%. This is too wet for preparing a dough suitable in the present invention. Hence, the moisture content of the dough has to be reduced, e.g. by partial drying or mixing it with dry potato-derived products such as potato flakes, potato granules or potato starch. Alternatively, other starchy matter may be added to the dough, e.g. to partially replace the potato flakes, granules or starch, e.g. from corn or rice, in an amount of 0-30% (based on the dough). Preferably, to conveniently obtain a desired moisture content, the mashed potatoes are mixed with dry potato starch and/or potato flakes and/or potato granules, e.g. in a weight ratio fresh potato mash : starch/flakes/granules is between 1 : 2 and 1 : 0.1. The dough comprises preferably at least 20% wt, more preferably at least 30%, most preferably more than 50% by weight of mashed fresh potatoes, e.g. up to 99%, preferably up to 75%. Such mashed potatoes may be obtained by processes as are known in the art. It is preferred that the potatoes are only partially cooked (contrary to the fully cooking as is conventionally done for preparing a mashed potato for direct consumption), such as:
- peeling raw potatoes,
- dividing the potatoes into smaller particles, e.g. slices of 2-10 mm,
- blanch (e.g. 8-15 minutes), steam or boil (but preferably only partially cook) the potato particles at 85-95°C (the actual boiling, steaming or blanching time being dependent e.g. on the size of the potato particles and temperature, as the person of average skill in the art can easily determine),
- grate or mash the potatoes by using suitable grating, mashing or mixing equipment (e.g. by passing through 2-4mm slits).

Potato granules are usually dehydrated single cells or aggregates of cells of the potato tuber dried to about 6-7% moisture. They are usually produced by the so called "add-back" process, in which cooked potatoes are reduced in moisture content by adding back enough previously dried granules to give a "moist mix" which after holding can be satisfactorily granulated to a fine powder. As further ingredients granules may contain emulsifier, anti-oxidants, colorants and/or flavours. Potato flakes are usually dehydrated mashed potatoes which can be made by applying cooked mashed potatoes to the surface of a single drum dryer fitted with applicator rolls, drying the deposited layer of potato solids rapidly to the desired final moisture content (6-9%) and breaking the sheet of dehydrated potato solids into a suitable size for packaging. The standard procedure includes a blanching and cooling step before cooking, these two steps are missing in the so called "low-leach" process. Flakes produced by the "low-leach" process are often used in the snack industry because of the higher free starch content. Commercial flakes vary in flake size (10-60 mesh). As further ingredients flakes may contain emulsifier, anti-oxidants, colorants and/or flavours. All commercial flakes and granules are in principle suitable in the process according to the present invention. Potato starches can be native or pregelatinized potato starch as well as physically or chemically treated starch. Commercial starches vary in residual water content (6-20%).

Instead of or in addition to potato flakes/granules/starch or rice or corn starch it may also be preferred to include vegetable matter other than of potato, rice or corn (preferably in the form of dry powder or vegetable puree), such as e.g. herbs, spices, (raw, roasted, fried or sautéed) onion, dried tomato powder or puree, red bell pepper powder or puree. This can have an advantageous effect on the taste and/or texture, and provides new taste opportunities. Such matter is suitable included in an amount of 0.1-30%, and can be included into the dough prior to forming. As the present invention preferably relates to a savoury snack food, it can be preferred that 0.1-5% salt is included into the dough prior to forming. Other ingredients that can be included are dairy ingredients such as cheese, caseinate, whey powder, dry milk powder, cream powder, etcetera, e.g. in an amount of 0.1-15%. Also flavourings, natural or artificial can be included, as well as MSG, ribotides, and/or organic acids. Optionally, 0.1-10% wt of sugar or other sweetener may be included into the dough. All components mentioned in this paragraph are in amounts as taken on the fresh dough, and they may be incorporated into the dough. However, part or all of such additional components may also be added after the shaping, e.g. prior to, during or after the drying, optionally using a carrier, dispersing or sticking agent, such as water, oil, an emulsion, or other. A browning or seasoning agent may be sprayed onto the particles e.g. using such dispersing agent.

Although the invention relates to snack food products or particles of crinkled dough sheet being low in fat, some oil or fat may be included in the formulation, so as influence the texture of the dough and handling of it, as well as to influence the crispiness and firmness of the resulting products, and additionally to enhance the flavour or flavour delivery and/or to act as medium to provide flavours or herbs or spices to the snack particles. The oil or fat may be included into the dough and/or sprayed onto the products at any stage after forming the sheet. The amount of oil/fat in this is preferably 0-20% (more preferably 0.1-20%, still more preferably 0.1-10% wt, most preferably 0.1-5% wt), based on the dried product. The oil/fat may be sprayed onto the sheet as oil or fat, or as an emulsion with an aqueous liquid.

Herbs, salt, spices, seasoning or flavours may also be sprayed onto the sheeted dough or the formed snack particles or already dried snack particles as a solution/dispersion in water, oil or an oil and water containing emulsion.

The invention further extents to the products obtainable by the above process. As such products are dried, the weight percentage of various preferred ingredients is considerably higher in the dried particle than in the dough recipe, as set out above (e.g. going from a moisture content of about 50% in the dough to a moisture content of about 0-1 % in the final product will almost double the amount of the respective other ingredients). Thus, (weight percentages based on the final, dried products) the invention further relates to a crispy or brittle (savoury) snack food product having a fat content of 0-20% (preferably 0.1-20%, more preferably 0.1-10% wt, most preferably 0.1-5% wt) and a moisture content of 0-8% (preferably 0.5-6%, more preferably 1-5% wt) comprising at least 40% (preferably at least 60%) by weight of dry components of one or more of potato, corn, or rice, which food product is shelf stable for at least 1 month, wherein the snack food product has a thickness of 2-30 mm (preferably 3-10 mm), a length and width of 1-8 cm (preferably 2-6 cm), and which product contains on at least one side a plurality of crinkles composed of two thin sheets (0.05-1 mm, preferably 0.05-0.6 mm, most preferably 0.1-0.4 mm thin) enclosing a void (the void containing a gas such as air).

Preferably, the snack food product is a particle or piece of crinkled dough sheet (in short: crinkled particles). The weight of the dried crinkled product is preferably 0.1-8 g, more preferably 0.3-5 g, most preferably 0.5-3 g. It is preferred that in the crinkled particles individual sheet parts can be identified from which the crinkled particles are composed (partly as it is pleasing to the eye, partly as such products are believed to be more crispy). It is preferred that the individual sheet parts have a thickness of 0.05-1 mm, preferably 0.05-0.6 mm, more preferably 0.1-0.6 mm, most preferably 0.1-0.4 mm. If the folding or loosely laminating is obtained e.g. by the preferred embodiment as described above (transport means with lower speed than the sheeted dough), the individual particles can have a crinkled appearance with crinkles more or less aligned (e.g. parallel to the axis of rotation of the rollers): the crinkles or folds may not be completely parallel, but are also not completely randomly orientated. Suitably, at least 50% (e.g. the majority) of the crinkles or folds have an angle to eachother of between 0° (i.e. completely parallel) to about 40° (clearly visible sharp angle). The products and particles according to the invention suitably have 2-100 crinkles per particle, preferably 5-50 crinkles per particle.

The snack food product according to this invention can e.g. be in the shape of a flat disc or in the shape of a leaf or is concave or has a saddle shape (concave-convex). Such shapes are fairly conventional for crisps (or chips). The circumference (or overall shape when projected flat) is to a large extent determined by the forming step (i.e. prior to drying) in the process as set out above. The 3-dimensional shape (e.g. concave, curled up, saddle-shape) can suitable be obtained by drying in a particular shape. For example, when, after forming the individual pieces of dough, prior to drying (i.e. still flexible because wet dough) the pieces are put in a mould and which moulds are concave, preferably concave in one direction (i.e. a mould in the shape of a gutter or trough, e.g. with a radius of 3-20 cm, a width of 3-8 cm, and a depth of 0.5-2 cm), and dried whilst in such mould, due to the concave shape the dried crisps may also have a more or less concave shape. Surprisingly, it was found that when the concave-shaped "gutters" or "troughs" are aligned to the crinkles, i.e. the orientation of the moulds is such that the straight side of the bottom of the gutter or trough is (substantially) parallel to the crinkles of the crinkled shaped pieces (and thus conveniently also to the axis of the rollers), the still wet dough pieces fold relatively well into the mould, due to the pliable nature of the crinkles when aligned with the gutter or trough.

Furthermore, to the surprise of the inventors, drying such crinkled pieces when in such concave moulds in the direction indicated can result in a large proportion of the dried particles that have obtained (next to the concave shape similar to the shape of the mould) a curve substantially perpendicular to the curve of the mould, in the other direction (i.e. convex), resulting in a desired saddle-like shape of the dried particle. This may be due to the particular manufacturing and location and direction of crinkles.

As mentioned before, it may be preferred that the formed individual crinkled dough particles are shaped from flat lying crinkled dough pieces into curved, bent, concave-convex, (double)concave, or (double)convex crinkled dough particles. Thus, the invention further relates to crinkled dough particles having a composition as mentioned above, which crinkled dough particles have an overall curved, bent, concave-convex, (double)concave, or (double)convex shape. "Overall" in this context is to be understood as the shape of the whole particle, which particle itself further contains a crinkled structure. In the process according to the invention, by loosely folding and/or loosely laminating a thin sheet (e.g. of thickness 0.05-1 mm) a crinkled sheet of overall thickness of 2-30 mm thickness (preferably 3-10 mm thickness) can be obtained having preferably 2-100 crinkles per 5 cm. Thus, disregarding the fact that the particles according to the invention may be e.g. curved, bent, concave, convex, concave-convex, or double concave or double convex, the particles according to the invention have a thickness of 2-30 mm, preferably 3-10 mm, which can be curved, bent, concave, etcetera. It is preferred that the dried particles or products according to the invention comprise 0.2-10% salt (weight percentages based on the final, dried particles or products).

Optionally (e.g. depending upon the taste desired), the products may also comprise (in weight percentages based on the final, dried products) 0.2-60% of herbs, spices, flavourings or vegetable matter other than of potato, rice, corn, or wheat and/or 0.2-30% of dairy products. All flavours or seasonings suitable to e.g. crisps or chips may be included, as well as a browning composition. Such components (flavourings, seasonings, salt, herbs, spices, dairy products etcetera can suitably be included in the dough, e.g. prior to forming into thin sheets.

### EXAMPLES

### Example 1

Fresh potatoes (variety Marabell, starch content about 13-15%) were peeled and sliced into a thickness of approx. 5 mm. The slices were blanched in water at about 90°C for 10 minutes. The blanched slices were grated (slit 3 mm) to obtain a coarse mash, having a moisture content of about 82 %. To this coarse mash, a dry mix was added, such that the final mixture contained 66% coarse mash of fresh potatoes and 34% dry mix. Said dry mix contained about: 43% dry potato flakes, 43% potato granules (ex Knorr), 1.5% salt, 5.7% dry glucose syrup, 6.8% palm oil. This mixture was mixed in a planetary mixer for 3 minutes, thus obtaining a potato 'dough'. The moisture content of the resulting mixture dry ingredients + mashed fresh potatoes was about 50-60%.

This dough was subjected to twin-rollers to obtain a sheet, the distance between the rollers was 0.35 mm, and the dough sheet leaving the twin rollers at about 15 cm/s. The sheet was fed onto a moving belt having a speed (in the direction away from the rollers) of about 1.5 cm/s, so that the dough sheet was folded or laminated loosely to a crinkled sheet. Individual pieces (shape: oval, length about 4 cm, width about 3 cm) were cut out of the crinkled sheet by stamping. These pieces were dried in an oven for approx. two and a half hours, the air having a temperature of approx. 98°C. The resulting products had a moisture content of below 3% (wt), and were crispy and had a crinkled appearance, and a neutral, light potato flavour. The product could be flavoured by afterwards spraying onto it a suspension of spices in either oil, water or an emulsion.

### Example 2

The same dough was subjected to the same roller and belt speeds and the same stamping into ovals. The so-obtained ovals were subjected to a pre-drying (by convection) whilst lying in concave-shaped cavities (not covered) to shape and fix the shape by subjecting them for 8 minutes to 120°C, followed by a conventional drying (on a belt) to dry to the required final moisture content of below about 3%) at about 90°C. During the first drying step, the majority of the oval particles deformed in shape, coming partially loose from the concave-shaped cavity and giving a typical saddle-like shape.

### Example 3, 4

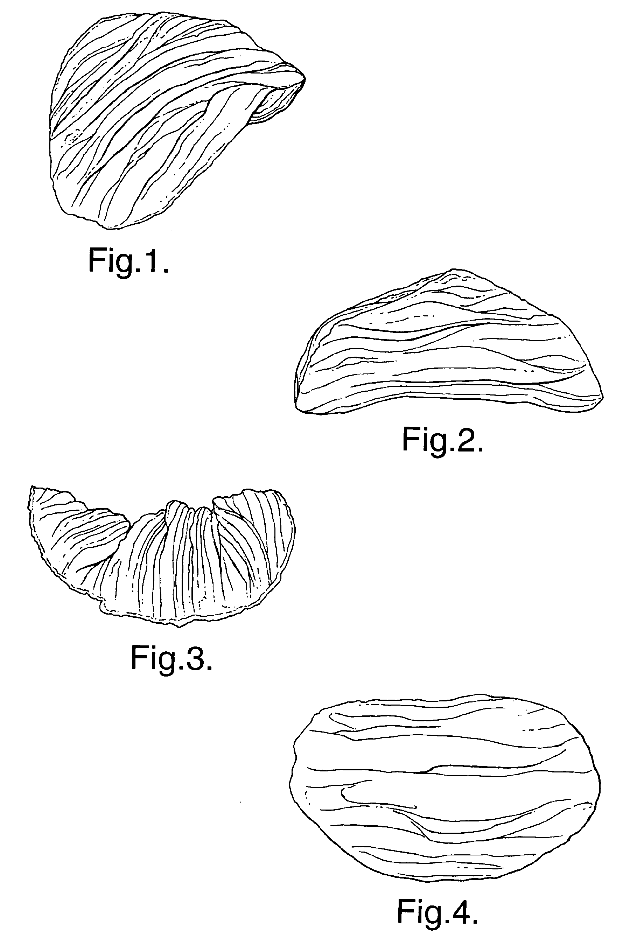

Examples 1 and 2, respectively, were repeated, with the exceptions that the distance between the rollers was reduced to 0.2 mm, and the ratio speed of the extruded sheet: speed of the moving belt was 30 : 1. Example 4 gave similar saddle-like shapes of the majority of the particles as example 2. A schematic representation of various views of a typical particle that was obtained in example 4 can be seen in figure 1.

## Claims

1. Process for preparing a snack food product, which process involves the steps of:
- preparing a dough comprising 30-100% (weight % of the total dough) matter from potatoes and/or corn and/or rice, the dough having a moisture content of 35-70% (weight % of the total dough) and a protein content of less than 3% (weight % of the total dough),
- forming the dough into sheets having a thickness of 0.05-1 mm (preferably 0.05-0.6 mm) by sheet-forming means,
- loosely folding and/or loosely partly laminating the dough sheet to yield a crinkled dough sheet
- forming the crinkled dough sheet into individual crinkled pieces,
- drying the crinkled pieces to a moisture content of 0-8% (preferably 0-6% wt) (of the dried products),
- packing the dried pieces,
wherein the crinkled dough sheet and crinkled pieces are not compressed.

2. Process according to claim 1, wherein the dough comprises 30-100% (weight % of the total dough) mashed potatoes and/or potato starch and/or potato flakes and/or potato granules.

3. Process according to claim 1-2, wherein the sheet-forming means comprises a pair of rollers.

4. Process according to claim 1-3, wherein the dough sheet is fed onto transport means.

5. Process according to claim 4, wherein the transport means comprise a moving belt.

6. Process according to claim 4-5, wherein the ratio "speed of the dough leaving the sheet-forming means" : "speed of the transport means" is between 100:1 and 3:1, preferably between 50:1 and 5:1.

7. Process according to claim 1-6, wherein drying of the individual pieces is effected by oven-drying.

8. Process according to claim 7, wherein the individual pieces are dried in moulds which moulds are concave.

9. Process according to claim 8, wherein the moulds are gutter or trough-shaped and wherein the orientation of the moulds is such that the straight side of the bottom of the gutter or trough is (substantially) parallel to the crinkles of the crinkled shaped pieces.

10. Process according to claim 1-9, wherein the dough is prepared by making mashed potatoes from fresh potatoes, which mashed potatoes are mixed with dry potato starch and/or potato flakes and/or potato granules, in a weight ratio fresh potato mash : starch/flakes/granules is between 1 : 2 and 1 : 0.1.

11. Process according to claim 1-10, wherein by the loosely folding and/or loosely laminating the formed thin sheet a crinkled sheet of overall thickness of 2-30 mm thickness (prior to drying) (preferably 3-10 mm thickness) is obtained.

12. Process according to claim 1-11, wherein 0-20% (preferably 0.1-20 wt % based on the dried product) oil and/or fat is included into the dough and/or sprayed onto the products.

13. Snack food product having an oil/fat content of 0-20%, preferably 0.1-20% (wt % based on the dried product) and a moisture content of 0-8% (preferably 1-5% wt) comprising at least 40% (preferably at least 60%) by weight of dry components of one or more of potato, corn, rice, which snack food product is shelf stable for at least 1 month, wherein the snack food product has a thickness of 2-30 mm (preferably 3-10 mm), a length and width of 1-8 cm, and which product contains on at least one side a plurality of crinkles composed of two thin sheets (0.05-1 mm, preferably 0.05-0.6 mm thin) enclosing a void.

14. Snack food product according to claim 13, which in the shape of a flat disc or in the shape of a leaf or is concave or has a saddle shape (concave-convex).

15. Product according to claim 13-14, wherein the weight of an individual product is 0.1-8 g.

16. Product according to claim 13-15, having 2-100 crinkles.

17. Product according to claim 13-16, further comprising 0.2-10% salt.

18. Product according to claim 13-17, further comprising 0.2-60% of herbs, spices, seasoning, flavourings or vegetable matter other than of potato, rice or corn.

19. Product according to claim 13-18, further comprising 0.2-30% of dairy products.
